# EUROPEAN PATENT SPECIFICATION

(11) **EP 0 519 027 B1**
(45) Date of publication and mention of the grant of the patent: **06.03.1996**
(21) Application number: 92900787.0
(22) Date of filing: 20.12.1991
(51) Int. Cl.: A47L 23/22, A47G 27/02

(54) **DOORMAT AND APPARATUS FOR PRODUCING THE SAME**
FUSSMATTE UND VORRICHTUNG ZUR HERSTELLUNG DERSELBEN
PAILLASSON ET APPAREIL POUR SA PRODUCTION

(30) Priority: 27.12.1990 KR 9021958
(43) Date of publication of application: 23.12.1992
(73) Proprietor: LUCKY, LTD., Seoul 150-010 (KR)
(72) Inventor: KIL, Kee Sung, Cheongju-si, Choongchungbuk-do 360-600 (KR); WHANG, Woon Hyun, Cheongju-si, Choongchungbuk-do 360-300 (KR); LEE, Kang Youp, Cheongju-si, Choongchungbuk-do 360-300 (KR)
(74) Representative: Abnett, Richard Charles
(86) International application number: PCT/KR91/00033
(87) International publication number: WO 92/11798

(56) References cited:
- EP-A- 0 199 537
- DE-A- 2 107 054
- DE-C- 14 333
- DE-C- 942 712
- US-A- 3 235 440
- US-A- 3 893 795

## Description

### Technical Field

The present invention relates to a doormat and an apparatus for producing the same.

### Background of the Art

Various kinds of doormats have been used because a room was stained with muck adhered to the outsoles of shoes in the case of entering a room with stained shoes. To date, metallic coil spring bonded in a state of sheet or pile has been used as a doormat. Recently, synthetic resin was extruded in a fine fiber, and then the fibers got tangled with each other irregularly in a state of coil. The sheet thus obtained was used as a doormat. Of these types, the doormat made of metallic coil spring easily eliminated muck adhered to the outsoles of shoes. Such metallic doormats, however, had a disadvantage that it was difficult to shake fine muck from boots since the scraping effect was reduced by crushing of the metallic coil spring in using doormat. Another disadvantage was that it had poor feeling because of its hardness. The doormat made of pile had disadvantages in that it was inconvenient in wetting and therefore it had to be dry. Furthermore, it could hardly eliminate muck. Also, although the pile doormat eliminated well muck adhered to the outsoles of shoes, the muck when irregularly tangled in the apertures of the coil was difficult to eliminate.

A prior art doormat is described in German patent No DE-14333, which was published in 1881. This document describes a mat formed by making parallel rows of short, spaced, transverse cuts through a rubber sheet, and then permanently deforming the rectangular sheet portions defined between adjacent cuts in each row to form alternately upwardly and downwardly deflected sheet portions along the length of each row. The cuts in each neighbouring pair of parallel rows are offset from each other along the length of the rows by a distance half of that between the cuts in each row. The cuts in all the rows are equally and evenly spaced.

### Summary of the Invention

The invention provides a doormat and an apparatus for manufacturing a doormat as defined in the appendant independent claims. Preferred features of the invention are defined in dependent subclaims.

Advantageously the invention may provide a doormat having an excellent cushiony effect when people coming and going step on it when it is laid by a door or a gate, due to the spaces formed in the doormat by the corrugation of the bands of which it is formed, so as to solve the problems of the prior art doormats described above.

Preferably the doormat of the invention may be made of synthetic resin sheet.

Preferably the invention may provide a doormat which is convenient to use, and eliminates excellently muck adhered to the outsoles of shoes because of its good restoring force and elasticity.

In a preferred embodiment, convexities are provided on surfaces of the corrugated bands of the doormat to prevent slip during use.

In a further aspect the invention may advantageously provide an apparatus which comprises a simple structure and may easily manufacture the above doormat.

### Brief Description of the Figures

Figure 1 is a perspective view of a doormat embodying the present invention.

Figure 2 is a side view of the above doormat.

Figure 3 is a plan view of the above doormat.

Figure 4 is a front view of the above doormat.
Each (A), (B), (C) and (D) of Figure 5 is a plan view of the doormat prepared with bands having various convexities on the surfaces thereof.

Figure 6 is a schematic view of the apparatus for preparing the doormat according to the present invention.

Figure 7 is a plan view of the roller of the above apparatus.

Figure 8 is a plan view of an alternative roller for the above apparatus.

### Detailed Description

The synthetic resin composition formed into the doormat according to the present invention must be composed of materials which have excellent waterproofing, wear resistance, soluble property, elasticity and the like. Examples of organic polymers having such characteristics are polyvinyl chloride, polyesters, polyurethanes, polypropylenes, polyethylenes, polystyrenes and various synthetic rubbers.

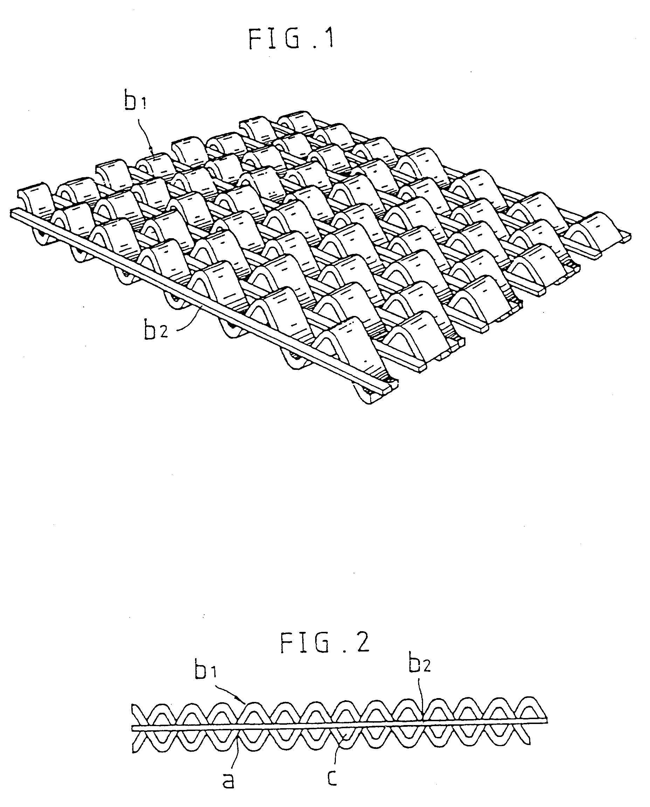

The illustrations in Figure 1 to Figure 8 more clearly show preferred embodiments of the present invention.

As illustrated in Figure 1 which is a perspective view of a doormat according to a preferred embodiment of the present invention, plural and continuous bands (b₁) having 1 to 5mm of thickness and 2 to 20mm of width are combined alternately with straight bands (b₂) having 0.2 to 5mm of thickness and 2 to 20mm of width. The corrugated bands (b₁) are combined in different phases.

Figure 2 is a side view of the above doormat, in which each corrugated band has different phase against the next corrugated band and such corrugated bands having different phases with each other are combined alternately. As a result, holes are formed in the mat in spaces between each corrugated band (b₁) and straight band (b₂).

Further, the space due to the phase difference between the corrugated bands (b₁) gives a good cushiony effect so that feeling is good at stepping on the above doormat. Also, since it has good restoring force and elasticity, muck adhered to the outsoles of shoes is easily removed.

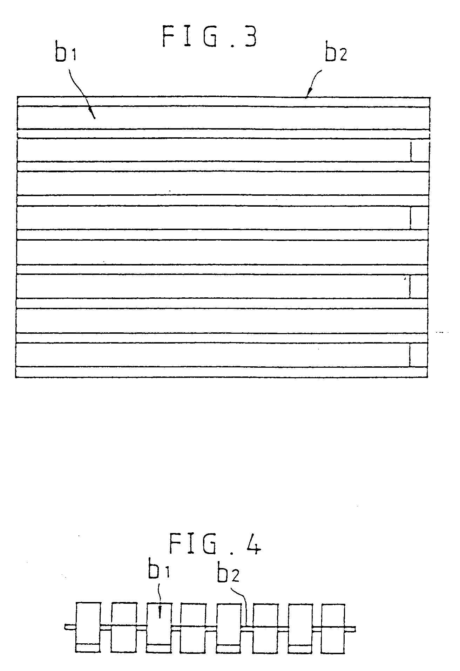

Figure 3 is a plan view of the above doormat and Figure 4 is a front view of the above doormat.

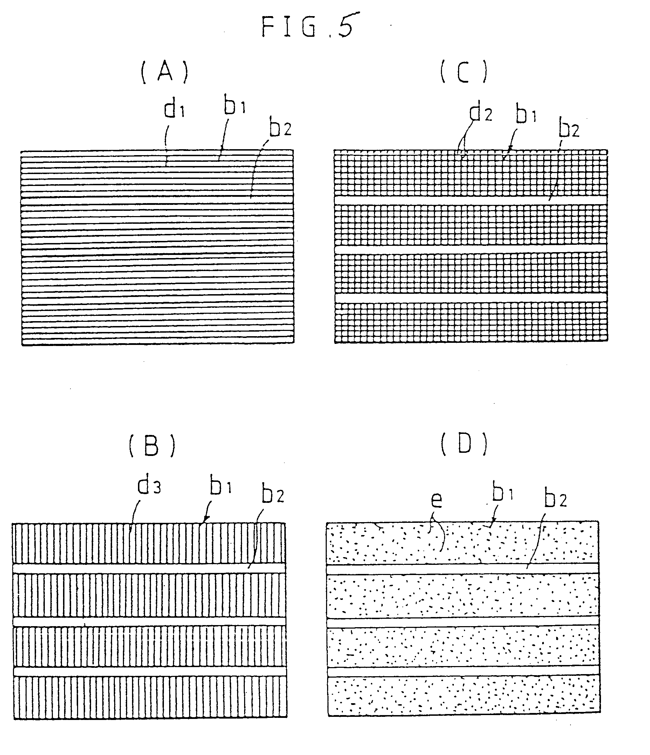

Figure 5 shows alternative embodiments of the doormat according to the present invention. Thus A of Figure 5 represents that convexities (d₁) are laterally or horizontally formed on the surface of each corrugated band (b₁) and B represents that other convexities (d₂) are formed in all directions on the surface of each corrugated band (b₁). Also, c represents that convexities (d₃) are formed in all directions on the surface of each corrugated band (b₁) and D represents that dotted convexities such as on the surface of an orange are irregularly formed. Therefore, slip is prevented when trampling the corrugated band (b₁) in using the doormat.

Therefore, the above doormats have good cushiony effect by space due to corrugation of synthetic resin sheet. Also, they eliminate muck well from the outsoles of shoes because of their good restoring force and elasticity. Furthermore, they are convenient and may prevent slip because of various convexities formed on the surfaces of the corrugated bands.

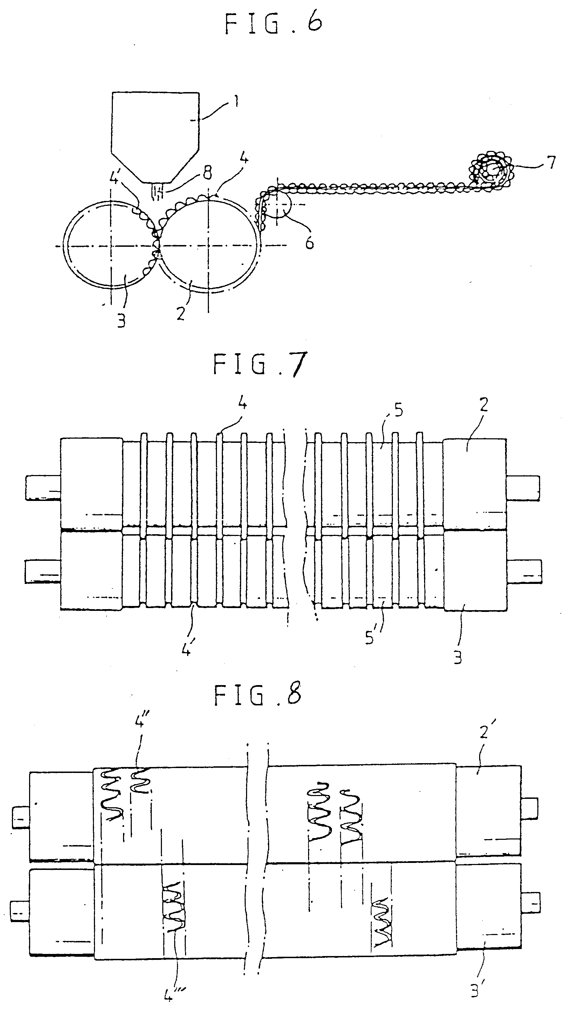

Figure 6 is a schematic view of an apparatus for preparing a doormat according to the present invention. The synthetic resin sheet (8) formed from an extrusion die (1) passes between rollers (2,3) having plural protuberances (4,4') in the lower part of the extrusion die (1), and is moulded into corrugated shape. Next, it passes by a guide roller (6) to be taken up by a take-up roller (7).

Figure 7 is a plan view of the rollers (2,3) of the above apparatus.

As illustrated in Figure 7, the drive roller (2) having plural corrugated protuberances (4) is meshed with the idler roller (3) having plural protuberances (4') in the lower part of the extrusion die (1). When the drive roller (2) is rotated, the idler roller (3) also rotates in attendance on the rotation of the drive roller (2). Walls (5,5') are optionally established between the protuberances, and each corrugated protuberance (4) formed on the drive roller (2) crosses with a corrugated protuberance (4') formed on the idler roller (3). Since the guide roller (6) is placed near the rollers (2,3), the synthetic resin sheet which has passed by the guide roller (6) is taken up by take-up roller (7).

Figure 8 is a plan view of an alternative roller for the above apparatus. The drive roller (2') having plural corrugated protuberances (4'') is meshed with the idler roller (3') having plural corrugated protuberances (4''') in the lower part of the extrusion die (1). In the case that the drive roller (2') is rotated, the idler roller (3') also rotates in attendance on the rotation of the drive roller (2'). Also, a corrugated protuberance (4'') formed on the drive roller (2') crosses with the corrugated protuberance (4''') formed on the idler roller (3'). Since the guide roller (6) is placed near rollers (2',3'), the synthetic resin sheet which has passed by the guide roller (6) is taken up by take-up roller (7).

The doormat prepared by the above process may be cut to optional size according to use. The structure of the apparatus for preparing the doormat is very simple and the process for preparing the doormat is also easy in the case of use of the above apparatus. Accordingly, efficiency of work can be accelerated and a doormat having good qualities can be prepared.

## Claims

1. A doormat in which plural and continuous corrugated bands (b₁) of 1 to 5mm thickness and 2 to 20mm width are alternately combined in different phase, a straight band of 0.1 to 5mm thickness and 2 to 20mm width being positioned between and linking the proximate edges of each neighbouring pair of corrugated bands.

2. A doormat according to claim 1, in which water drainage holes are defined between adjacent corrugated and straight bands.

3. A doormat according to any preceding claim, in which the corrugated bands (b₁) have different widths.

4. A doormat according to any preceding claim, in which surface convexities are defined on the corrugated bands.

5. A doormat according to claim 4, in which the surface convexities are lateral, longitudinal, dotted, or in all directions.

6. An apparatus for manufacturing a doormat in which plural and continuous corrugated bands (b₁) of 1 to 5mm thickness and 2 to 20mm width are alternately combined in different phase, a straight band of 0.1 to 5mm thickness and 2 to 20mm width being positioned between and linking the proximate edges of each neighbouring pair of corrugated bands, comprising an extrusion die (1), a drive roller (2) and an idler roller (3) each having plural corrugated protuberances (4,4') for shaping material extruded from the extrusion die therebetween, a guide roller (6) placed near the drive and idler rollers (2,3) for guiding the shaped material, and a take-up roller (7) for taking up the shaped material, in which the drive roller (2) is meshed with the idler roller (3) such that the corrugated protuberances (4) on the drive roller (2) cross with the corrugated protuberances (4') on the idler roller (3).

7. An apparatus according to claim 6, in which walls (5,5') are defined on the drive and idler rollers between the corrugated protuberances.

8. An apparatus according to claim 6 or 7, in which the rollers are shaped so that water drainage holes are formed between adjacent corrugated and straight bands of the doormat.

9. An apparatus according to claim 6, 7 or 8, in which the rollers are shaped so that the doormat comprises corrugated bands of different widths.

10. An apparatus according to any of claims 6 to 9, in which the corrugated protuberances of the rollers are shaped so that the doormat comprises corrugated bands on which surface convexities are formed, the surface convexities being for example lateral, longitudinal, dotted or in all directions.

## Patentansprüche

1. Türmatte, bei der mehrere, fortlaufend gewellte Bänder (b₁) mit einer Dicke zwischen 1 und 5 mm und einer Breite zwischen 2 und 20 mm abwechselnd in unterschiedlicher Phase kombiniert sind, wobei ein gerades Band mit einer Dicke zwischen 0,1 und 5 mm und einer Breite zwischen 2 und 20 mm zwischen den nächstgelegenen Kanten jedes benachbarten Paares gewellter Bänder liegt und diese aneinander befestigt.

2. Türmatte nach Anspruch 1, bei der zwischen benachbarten, gewellten und geraden Bändern Wasserabflußlöcher gebildet sind.

3. Türmatte nach einem der vorangegangenen Ansprüche, bei der die gewellten Bänder (b₁) unterschiedliche Breiten haben.

4. Türmatte nach einem der vorangegangenen Ansprüche, bei der auf den gewellten Bändern Oberflächen-Auswölbungen gebildet sind.

5. Türmatte nach Anspruch 4, bei der die Oberflächenauswölbungen seitlich, längs, gepunktet oder in allen Richtungen verlaufen.

6. Vorrichtung zum Herstellen einer Türmatte, bei der mehrere, fortlaufend gewellte Bänder (b₁) mit einer Dicke zwischen 1 und 5 mm und einer Breite zwischen 2 und 20 mm abwechselnd in unterschiedlicher Phase kombiniert sind, wobei ein gerades Band mit einer Dicke zwischen 0,1 und 5 mm und einer Breite zwischen 2 und 20 mm zwischen den nächstgelegenen Kantes jedes benachbarten Paares gewellter Bänder liegt und diese aneinander befestigt, wobei die Vorrichtung folgende Baugruppen umfaßt: eine Extrusionsdüse (1), eine Antriebswalze (2) und eine Leerlaufwalze (3), wobei jede dieser Walzen mehrere gewellte Vorsprünge (4, 4') zum Formen des aus der Extrusionsdüse extrudierten Materials zwischen sich aufweist, eine Führungsrolle (6), die nahe der Antriebs- und der Leerlaufwalze (2, 3) angeordnet ist, um das geformte Material zu führen und eine Aufnahmerolle (7) zum Aufnehmen des geformten Materials; wobei die Antriebswalze (2) mit der Leerlaufwalze (3) so kämmt, daß sich die gewellten Vorsprünge (4) auf der Antriebswalze (2) mit den gewellten Vorsprüngen (4') auf der Leerlaufwalze (3) kreuzen.

7. Vorrichtung nach Anspruch 6, bei der auf der Antriebs- und auf der Leerlaufwalze zwischen den gewellten Vorsprüngen Wände (5, 5') gebildet sind.

8. Vorrichtung nach einem der Ansprüche 6 oder 7, bei der die Walzen so geformt sind, daß zwischen benachbarten, gewellten und geraden Bändern der Matte Wasserablauflöcher gebildet werden.

9. Vorrichtung nach einem der Ansprüche 6, 7 oder 8, bei der die Walzen so geformt sind, daß die Türmatte gewellte Bänder unterschiedlicher Breite umfaßt.

10. Vorrichtung nach einem der Ansprüche 1 bis 9, bei der die gewellten Vorsprünge der Walzen so geformt sind, daß die Türmatte gewellte Bänder aufweist, auf denen Oberflächenauswölbungen ausgebildet sind, wobei die Oberflächenauswölbungen beispielsweise seitlich, in Längsrichtung, gepunktet oder in allen Richtungen verlaufen.

## Revendications

1. Un paillasson dans lequel des bandes ondulées multiples et continues (b₁) de 1 à 5 mm d'épaisseur et de 2 à 20 mm de largeur sont alternativement combinées en décalage de phase, une bande droite de 0,1 à 5 mm d'épaisseur et de 2 à 20 mm de largeur étant disposée entre les bords proximaux de chaque paire voisine de bandes ondulées et les joignant.

2. Un paillasson selon la revendication 1, dans lequel des trous de drainage de l'eau sont définis entre les bandes adjacentes ondulées et droites.

3. Un paillasson selon l'une quelconque des revendications précédentes, dans lequel les bandes ondulées (b₁) présentent des largeurs différentes.

4. Un paillasson selon l'une quelconque des revendications précédentes, dans lequel des convexités de surface sont définies sur les bandes ondulées.

5. Un paillasson selon la revendication 4, dans lequel les convexités de surface sont latérales, longitudinales par points, ou dans toutes les directions.

6. Un appareil pour fabriquer un paillasson dans lequel des bandes ondulées multiples et continues (b₁) de 1 à 5 mm d'épaisseur et de 2 à 20 mm de largeur sont alternativement combinées en décalage de phase, une bande droite de 0,1 à 5 mm d'épaisseur et de 2 à 20 mm de largeur étant disposée entre les bords proximaux de chaque paire voisine de bandes ondulées et les joignant, comprenant une filière d'extrusion (1), un rouleau d'entraînement (2) et un rouleau tournant fou (3), chacun étant muni de plusieurs protubérances ondulées (4, 4') pour conformer le matériel extrudé à partir de la filière d'extrusion disposée entre eux, un rouleau de guidage (6) placé à proximité des rouleaux d'entraînement et des rouleaux tournants fous (2, 3) pour guider le matériel mis en forme, et un rouleau de récupération (7) pour récupérer le matériau mis en forme, dans lequel le rouleau d'entraînement (2) est en prise avec le rouleau tournant fou (3), de telle façon que les protubérances ondulées (4) sur le rouleau d'entraînement (2) croisent les protubérances ondulées (4') sur le rouleau tournant fou (3).

7. Un appareil selon la revendication 6, dans lequel des parois (5, 5') sont définies sur les rouleaux d'entraînement et sur les rouleaux d'entraînement fous entre les protubérances ondulées.

8. Un appareil selon la revendication 6 ou 7, dans lequel les rouleaux sont conformés de telle façon que les trous de drainage de l'eau soient formés entre des bandes adjacentes ondulées et droites du paillasson.

9. Un appareil selon la revendication 6, 7 ou 8, dans lequel les rouleaux sont conformés de telle façon que le paillasson comporte des bandes ondulées de différentes largeur.

10. Un appareil selon l'une quelconque des revendications 6 à 9, dans lequel les protubérances ondulées des rouleaux sont conformées de telle façon que le paillasson comporte des bandes ondulées, sur lequel des convexités de surface sont formées, les convexités de surface étant par exemple latérales, longitudinales, par points, ou bien dans toutes les directions.
